# EUROPEAN PATENT APPLICATION

(11) **EP 4 775 021 A1**
(43) Date of publication of application: **15.07.2026**
(21) Application number: 26150200.9
(22) Date of filing: 05.01.2026
(51) Int. Cl.: A01D 46/26

(54) **HARVESTER HITCHED TO AN AGRICULTURAL TRACTOR INTENDED FOR CONTINUOUS HARVESTING OF STONE FRUITS, NUTS, APPLES AND CITRUS FRUITS EQUIPPED WITH FOUR SHAKERS**

(30) Priority: 13.01.2025 PL 45094125
(71) Applicant: WEREMCZUK FMR Sp. z o.o., 24-220 Niedrzwica Duza (PL)
(72) Inventor: WEREMCZUK, Robert, 21-030 Konopnica (PL); SKORZY SKA, JoannaL, 20-050 Lublin (PL)
(74) Representative: Kalita, Lucjan

(57) **Abstract**

Harvester hitched to an agricultural tractor intended for continuous harvesting of stone fruits, nuts, apples and citrus fruits equipped with four shakers consisting of a harvester frame 43 with road wheels 27 mounted in its rear part and a drawbar 21 in the front part, equipped with shakers 38, longitudinal conveyors 13, vertical transverse conveyors 14, contaminant extraction channels 15, cleaning fans 23, sealing scales 51, front self-aligning wheels 20, side grates 74, service platforms 16, control apparatuses 69 controlling the position of the front of the harvester, control apparatuses 72 controlling the position of the rear of the harvester, as well as a hydraulic system for drive and a hydraulic system for controlling the movements of the harvester, as well as equipped with electronic and electrical apparatuses controlling the hydraulic and electrical functions of the harvester, wherein the harvester has four shakers 38.

## Description

The subject of the invention is a harvester hitched to an agricultural tractor intended for continuous harvesting of stone fruits, nuts, apples and citrus fruits, equipped with four shakers.

### Prior art

Known from the patent description of Polish patent PL 200794 is a self-propelled harvester for harvesting fruits, particularly stone fruits, having a frame, four columns with road wheels, 4 fruit shaking mechanisms, longitudinal and transverse conveyors, fruit cleaning fans, as well as a sealing system catching fruits falling after shaking and transferring them to the longitudinal conveyors.

Known from American patent description US 2018279550 is a harvester for harvesting berry and stone fruits, having a frame, two fruit shakers, a system sealing the lower part of the harvester and catching fruits falling after shaking and transferring them to conveyors transporting fruits for cleaning and discharging into containers.

Known from Polish patent P. 429317 is a harvester for harvesting berry fruits, stone fruits, apples, nuts and other similar fruits collected by the shaking method. This harvester hitched to an agricultural tractor is constructed of a frame with a high working tunnel clearance and two columns with road wheels are attached to the frame. The harvester is equipped with two fruit shakers, a lower sealing system catching the shaken fruits and transferring them to side conveyors, which transfer the fruits for further cleaning and discharging into containers.

Known from the Polish patent is a self-propelled harvester according to patent PL 200794, equipped with four shakers having preferred qualities for stone fruit harvesting, but it is very expensive. The high price of the self-propelled harvester limits its availability for growers having smaller plantations.

However, all harvesters hitched to an agricultural tractor intended for harvesting stone fruits, apples and other similar fruits are equipped with only two fruit shakers, limiting the maximum working travel speed determining the harvesting efficiency of the harvester, which is a disadvantage of such a solution. Exceeding the limit working travel speed causes fruits to be left on the tree. The harvesting speed in turn affects the harvesting costs, particularly with high labour costs of the tractor and harvester operators. Furthermore, harvesters having two shakers usually have a low capacity for carrying crates with harvested fruits, which disadvantageously causes the necessity of unloading crates in rows and time losses for stops during row harvesting.

The solution according to the present invention solves the problems:
- high fruit harvesting costs due to high costs of the crew operating the harvester and tractor costs in relation to the quantity of fruits harvested per unit of time.
- small cultivation area serviced by one harvester.
- low load capacity of the harvester for carrying crates with fruits,
- necessity of unloading crates with fruits during row travel, which makes the organisation of transport of crates with goods costly and burdensome.

### Summary of the invention

The invention is set out in the appended set of claims.

Preferred effects of the invention
- significantly reduces fruit harvesting costs by reducing the cost per unit mass of harvested fruits.
- increases the cultivation area serviced by one harvester through a maximum of twice higher working speed of the harvester according to the invention.
- significantly increases the load capacity of the harvester according to the invention for carrying crates with harvested fruits, whereby unloading of crates only at the ends of rows is possible for most row lengths. Unloading exclusively at the ends of rows favourably affects the organisation of fruit reloading.

### Explanation of drawing figures

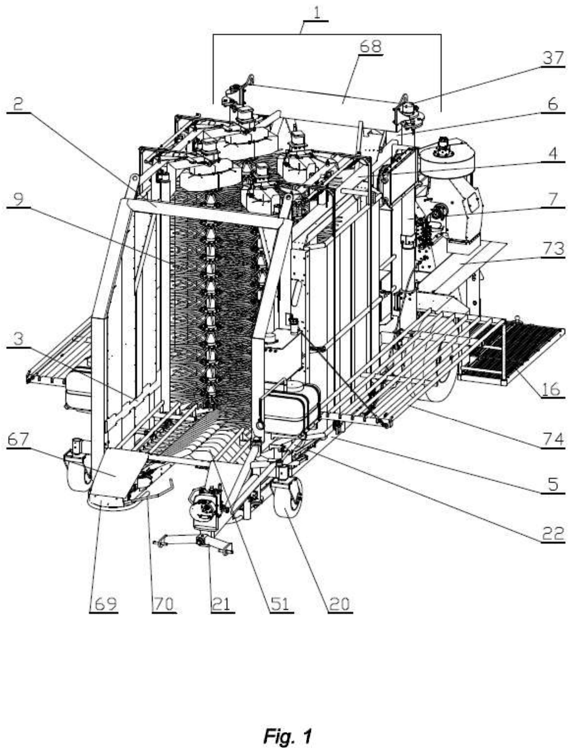

Fig. 1 shows the harvester in an oblique perspective view from the side.

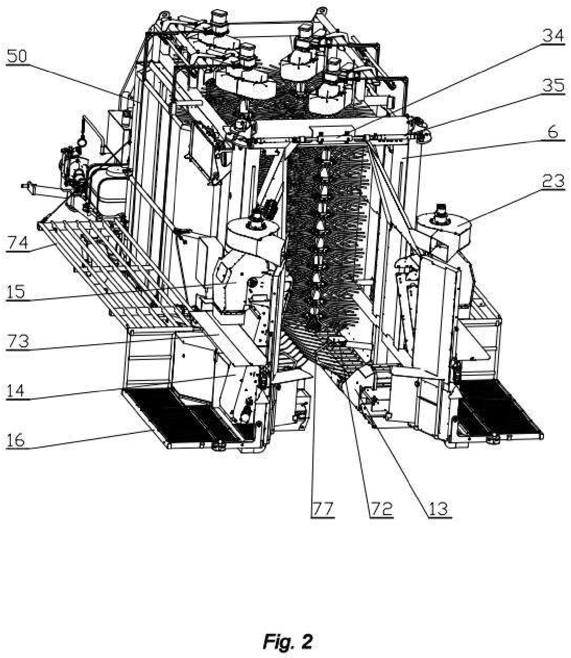

Fig. 2 shows the harvester in an oblique perspective view from the rear.

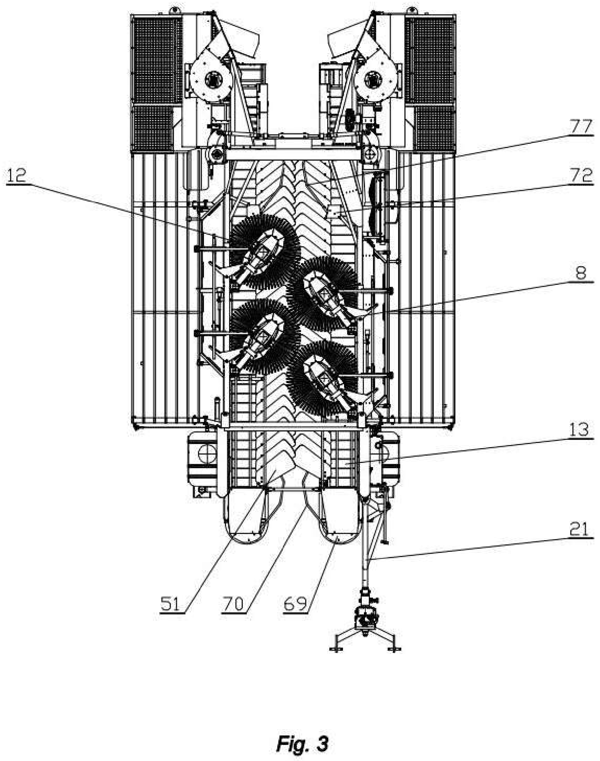

Fig. 3 shows the harvester in a top view, with the shakers on the left side displaced longitudinally against the shakers on the right side.

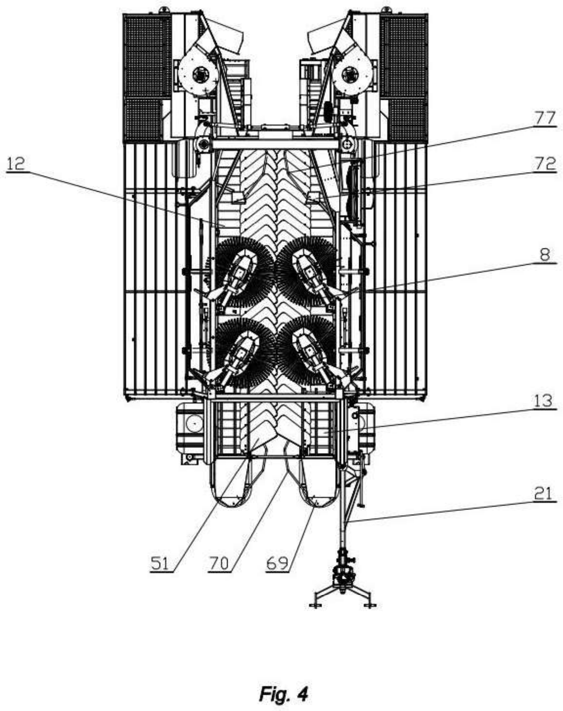

Fig. 4 shows the harvester in a top view, with the shakers on the left and right sides positioned opposite each other.

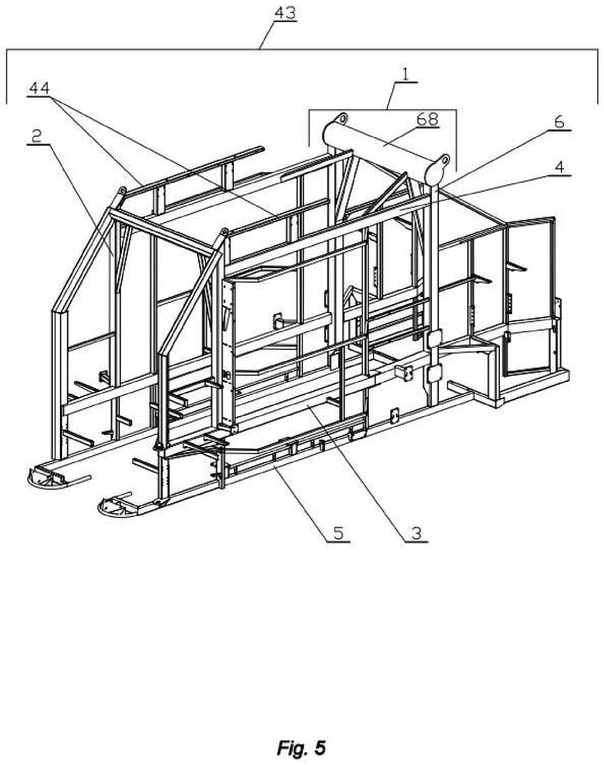

Fig. 5 shows the harvester frame in a perspective view, with the horizontal beam of the rear gate made of a tube with a circular cross-section.

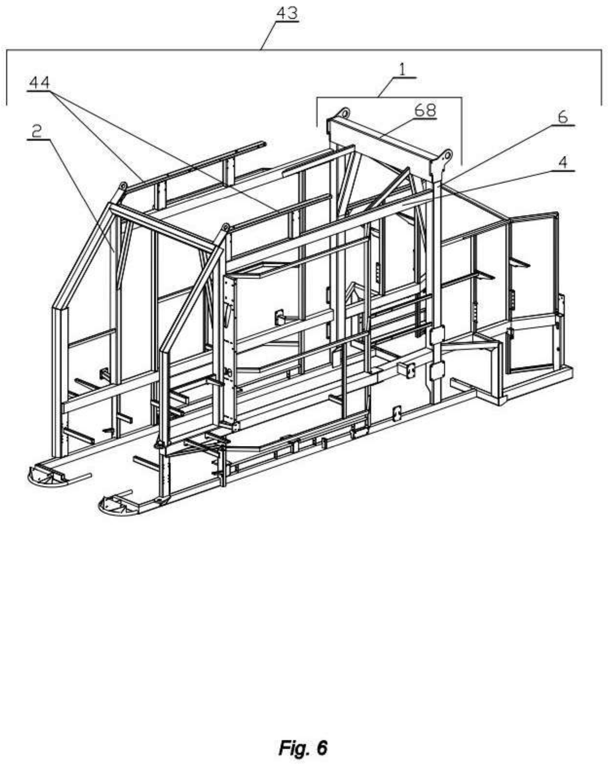

Fig. 6 shows the harvester frame in a perspective view, with the horizontal beam of the rear gate made of a tube with a rectangular cross-section.

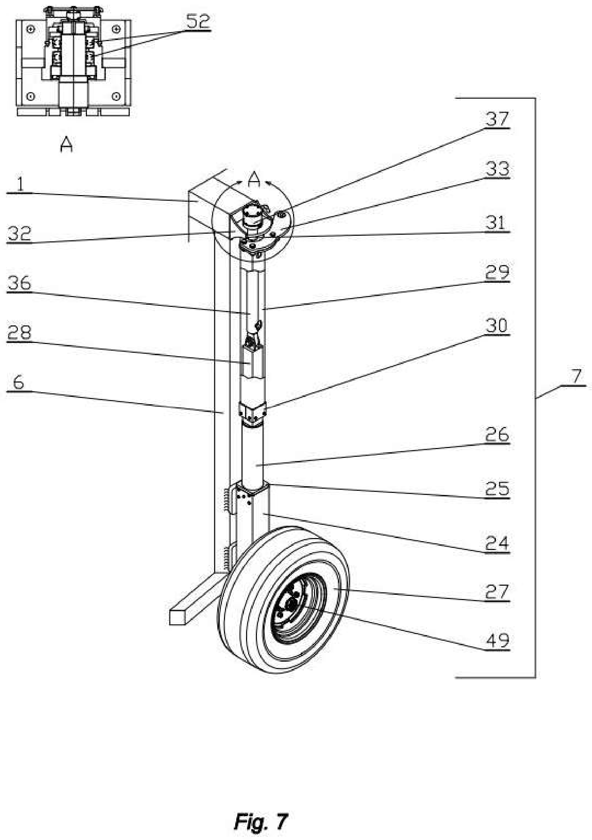

Fig. 7 shows in partial cross-section a road wheel column permanently connected to the vertical beam of the rear gate.

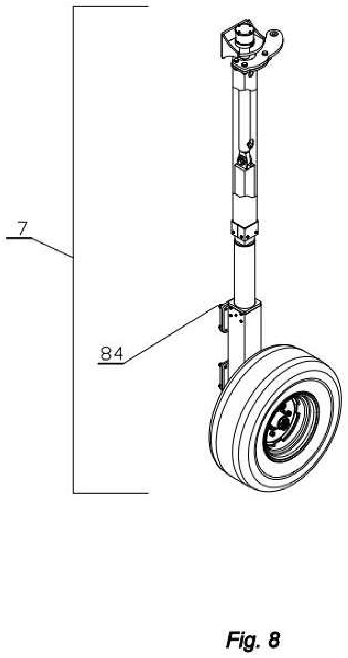

Fig. 8 shows a road wheel column detachably connected to the vertical beam of the rear gate by means of bolts 84.

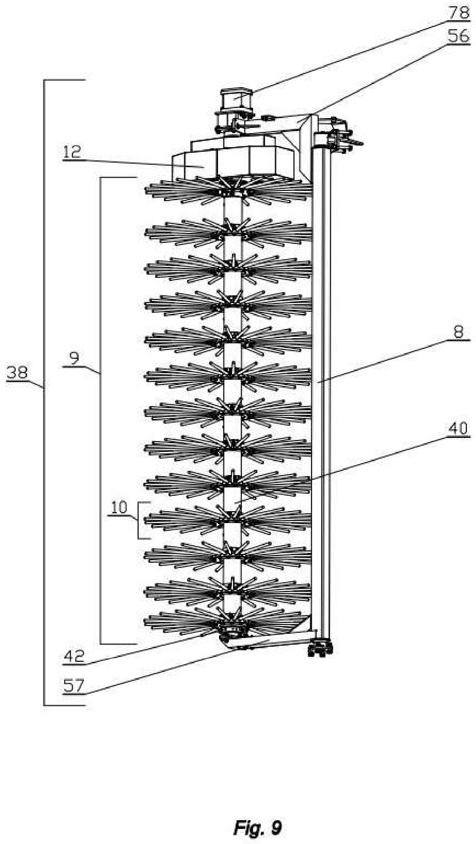

Fig. 9 shows a shaker in a perspective view.

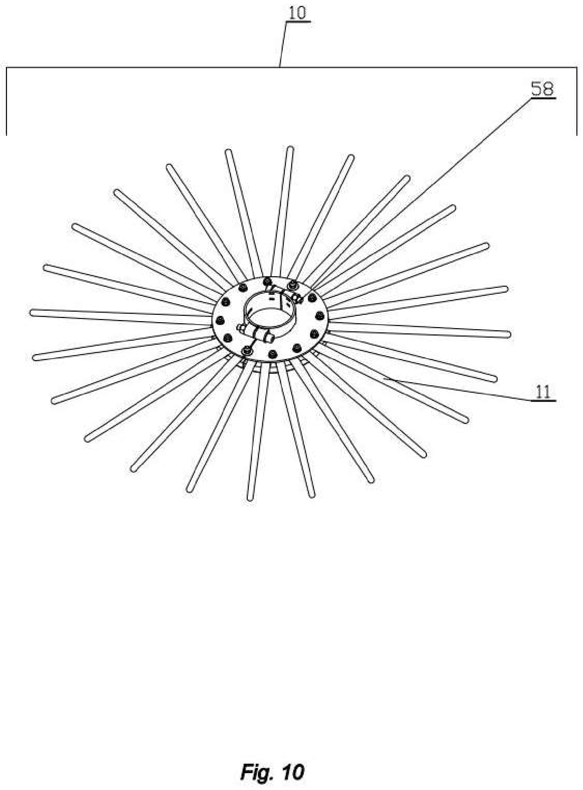

Fig. 10 shows a shaking assembly.

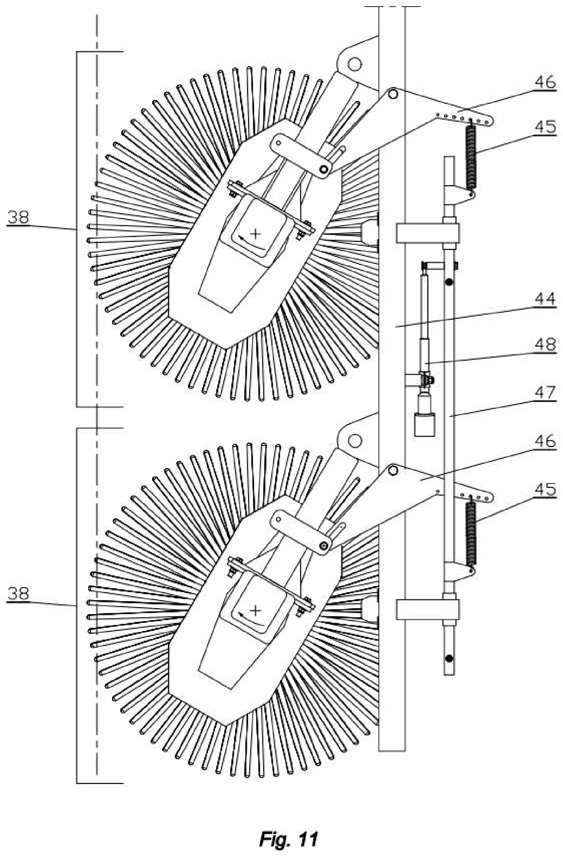

Fig. 11 shows an assembly of elements intended for positioning the shakers in the direction towards the centre of the harvester.

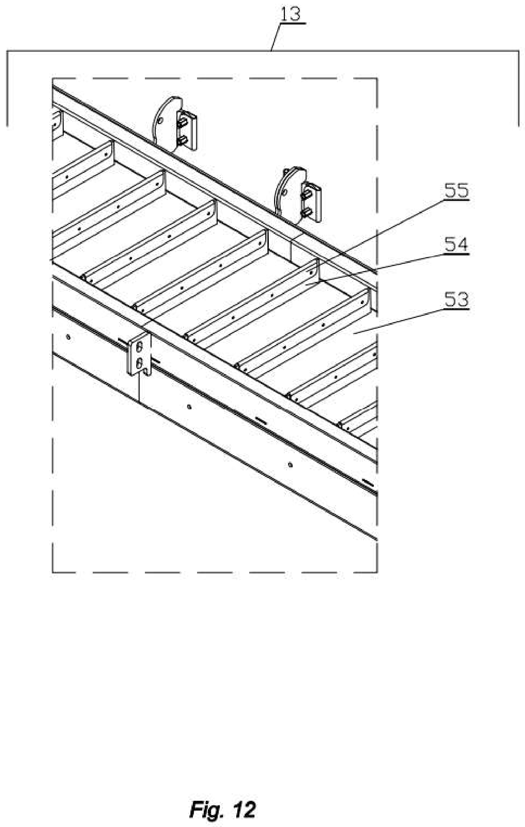

Fig. 12 shows a fragment of a modular belt of the longitudinal conveyor with cleats reinforced by sheet metal overlays.

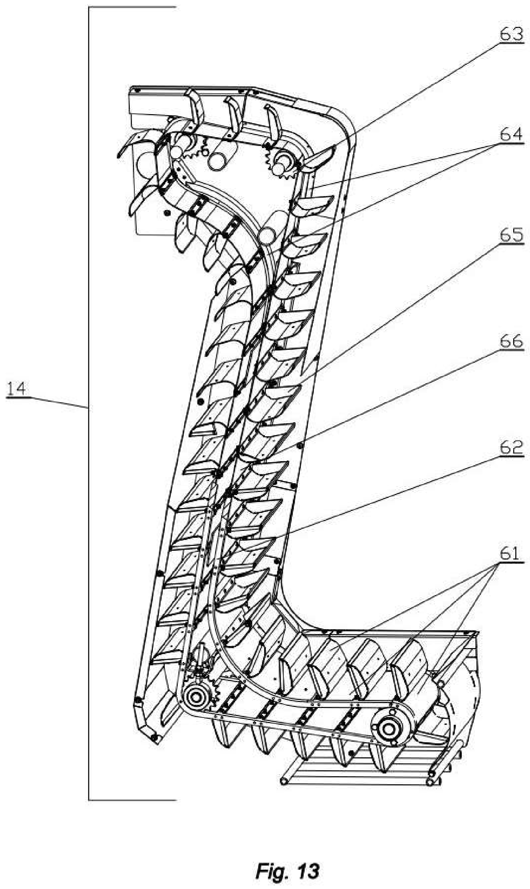

Fig. 13 shows in perspective cross-section a vertical transverse conveyor.

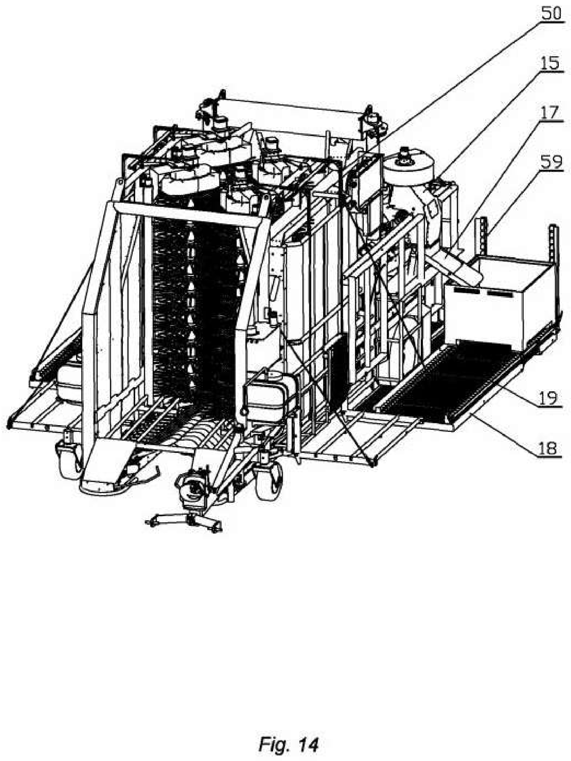

Fig. 14 shows in a perspective view the harvester with platforms and side grates.

### Embodiment of the invention

In the embodiment, the harvester hitched to an agricultural tractor intended for harvesting stone fruits, nuts, apples and citrus fruits is hitched to an agricultural tractor, has a frame 43 constructed of a rear gate 1 and a front gate 2, of supporting beams 3 connecting both gates, of upper connecting beams 4 and lower connecting beams 5. The transverse beam 68 of gate 1 is made of a tube with a rectangular cross-section or alternatively of a tube with a circular cross-section. To the vertical beams 6 of the rear gate 1, two complete columns 7 of road wheels 27 are attached and to the side walls of the harvester four frames 8 of shakers are pivotably attached, in which shaker columns 9 are rotatably mounted, equipped with shaking assemblies 10 with slightly conical plastic fingers 11. For oscillating movement of the shaker columns, inertia heads 12 with variable vibration amplitude are used. To maintain smoothness of driving movement between the motor 78 rotating constantly in one direction and the head.

To the side walls, two longitudinal conveyors 13 are attached as well as two vertical transverse conveyors 14 integrated therewith, terminated in the upper part with a contaminant extraction channel 15, with a cleaning fan 23 mounted on this channel. In the technology of fruit harvesting into crates, in the contaminant extraction channel 15, a grate 73 for crates is arranged, enabling slidable positioning of three crates. To the lower beam 5, service platforms 16 are attached and to the beam 3, grates 74 for empty crates are attached.

In the technology of harvesting into large bins, to the contaminant extraction channel 15, a discharge chute 17 is attached and to the lower beam 5, a side platform 18 with rollers 19 for moving bins is attached, whereas to the rear part of this platform, slopes 59 for unloading bins are attached.

In the front part of the harvester, two self-aligning support wheels 20 are arranged as well as a drawbar 21 for hitching the harvester to an agricultural tractor. For tilting the drawbar to the left or right, a hydraulic actuator 22 is used.

Road wheel 27 columns 7 are constructed of a sleeve 24 lined with a sliding insert 25 and into the sleeve 24, a tube 26 is inserted, terminated in the lower part with an axle 49 with road wheels 27 mounted thereon and in the upper part terminated with a square element 28, onto which an upper tube 29 is fitted, terminated with a square end piece 30 in the lower part, slidably fitted to the square element 28 and in the upper part terminated with an axle 31 mounted in transverse and longitudinal bearings 52, mounted in a housing 32 attached to the frame 43 of the harvester. To the axle 31, a control lever 33 is attached, driven by a double-acting hydraulic actuator 34 via pivoting rods 35. Inside the upper tube 29, a hydraulic actuator 36 is arranged, attached with the lower extending side to the tube 26 and with the upper fixed side to the axle 31. To the bearing housing 32, an apparatus for mechatronic measurement of the steering angle 37 is attached and the axle of this apparatus is connected to the axle 31. The road wheels 27 are equipped with dynamic brakes integrated with the brakes of the agricultural tractor and with a manual braking system independent of the agricultural tractor.

The shakers 38 are constructed of a shaker frame 8, a shaker column 9 consisting of a tube 40, equipped with shaking assemblies 10 with plastic fingers 11 of a slightly conical structure. In the lower part of the column 9, brakes 42 for rotation of the shaking column are installed and in the upper part, inertia heads 12 with adjustable vibration amplitude are attached. The shaking column 9 in the lower and upper part is rotatably mounted in the shaker frame 8 and the shaker frame 8 with its upper and lower part is pivotably mounted in the side walls of the harvester frame 43. The shaker frames 8 are pulled in the direction towards the centre of the harvester by levers 46 pivotably mounted on the harvester frame and to the opposite end of the levers 46, springs 45 are attached with one end and the other end of these springs 45 is attached to a tie rod 47. The magnitude of spring 45 tension is regulated by the movement of the tie rod 47 attached to an electric actuator 48. For road transport, oscillations of the shakers 38 are blocked by means of tensioning straps 50.

The harvester has two longitudinal conveyors 13 installed, with an attached modular plastic belt 53, having reinforced cleats 54 by placing metal sheets 55 on these cleats and attaching to the cleats 54. The rear part of the conveyor 13 has a raised shape to enable transfer of fruits from the longitudinal conveyor 13 to the vertical transverse conveyor 14.

In the rear part of the harvester, two vertical transverse conveyors 14 are installed. The lower part of the transverse conveyor 14 is arranged under the longitudinal conveyor 13, whereas the upper part is terminated with a contaminant extraction channel 15 with a cleaning fan 23 installed on this channel. The belt 61 of the vertical transverse conveyor 14 is constructed of two roller chains 62 guided on sprockets 63 and slides 64 and to these roller chains 62, profiled cleats 65 are attached whereas to the cleats 65, elastic filling fabric 66 is attached.

On both sides of the front part of the harvester in its lower part, two pick-up devices 67 are arranged.

In the front part of the harvester, below the level of the sealing scales 51, two control apparatuses 69 are arranged, automatically controlling the transverse movement of the front part of the harvester. The control apparatus 69 consists of a transversely deflectable strip 70, which after deflection by the tree trunk acts on inductive sensors generating electrical signals and the generated electrical signals are transmitted by the control apparatus 69 to hydraulic solenoid valves, causing transverse movement of the drawbar 21 moved by the hydraulic actuator 22.

In the rear part of the harvester, above the surface of the sealing scales 51, two control apparatuses 72 are mounted, equipped with a control strip 77, which through acting on inductive sensors generates electrical signals and the generated electrical signals, the control apparatus 72 transmits to the mechatronic angle measurement apparatuses 37 controlling the steering of the road wheels 27.

### Indication of possibility of industrial application of the invention

The harvester according to the invention can be used in fruit orchards adapted for harvester harvesting intended for continuous harvesting of stone fruits such as cherries, plums, apples, as well as for harvesting nuts and citrus fruits.

| Reference number | Name of element designated by reference |
|---|---|
| 1 | rear gate |
| 2 | front gate |
| 3 | supporting beams |
| 4 | upper connecting beams |
| 5 | lower connecting beams |
| 6 | vertical beams |
| 7 | complete columns |
| 8 | shaker frames |
| 9 | shaker columns |
| 10 | shaking assemblies |
| 11 | plastic fingers |
| 12 | inertia heads |
| 13 | longitudinal conveyors |
| 14 | vertical transverse conveyors |
| 15 | contaminant extraction channel |
| 16 | service platforms |
| 17 | discharge chute |
| 18 | side platform |
| 19 | rollers |
| 20 | support wheels |
| 21 | drawbar |
| 22 | hydraulic actuator |
| 23 | cleaning fans |
| 24 | sleeve |
| 25 | sliding insert |
| 26 | tube |
| 27 | road wheels |
| 28 | square element |
| 29 | upper tube |
| 30 | square end piece |
| 31 | axis |
| 32 | housing |
| 33 | control lever |
| 34 | double-acting hydraulic actuator |
| 35 | pivoting rods |
| 36 | hydraulic actuator |
| 37 | apparatus for mechatronic measurement of steering angle |
| 38 | shakers |
| 40 | tube |
| 42 | brakes |
| 43 | harvester frame |
| 45 | springs |
| 46 | levers |
| 47 | tie rod |
| 48 | electric actuator |
| 49 | axis |
| 50 | tensioning straps |
| 51 | sealing scales |
| 52 | transverse and longitudinal bearings |
| 53 | modular belt |
| 54 | cleats |
| 55 | metal sheets |
| 59 | slopes |
| 61 | belt |
| 62 | roller chains |
| 63 | sprockets |
| 64 | slides |
| 65 | cleats |
| 66 | filling fabric |
| 67 | pick-up devices |
| 68 | transverse beam |
| 69 | control apparatus |
| 70 | strip |
| 72 | control apparatus |
| 73 | grate |
| 74 | side grates |
| 77 | control strip |
| 78 | motor |
| 84 | bolts |

## Claims

1. Harvester hitched to an agricultural tractor intended for continuous harvesting of stone fruits, nuts, apples and citrus fruits equipped with four shakers consisting of a harvester frame 43 with road wheels 27 mounted in its rear part and a drawbar 21 in the front part, equipped with shakers 38, longitudinal conveyors 13, vertical transverse conveyors 14, contaminant extraction channels 15, cleaning fans 23, sealing scales 51, front self-aligning wheels 20, side grates 74, service platforms 16, control apparatuses 69 controlling the position of the front of the harvester, control apparatuses 72 controlling the position of the rear of the harvester, as well as a hydraulic system for drive and a hydraulic system for controlling the movements of the harvester, as well as equipped with electronic and electrical apparatuses controlling the hydraulic and electrical functions of the harvester, **characterised in that** it has four shakers 38.

2. Harvester according to claim 1 **characterised in that** the shakers 38 mounted on the left side of the harvester are displaced parallel to the direction of the longitudinal plane of symmetry of the harvester against the shakers mounted on the right side of the harvester.

3. Harvester according to claim 1 **characterised in that** the shakers 38 mounted on the left and right sides of the harvester are positioned opposite each other against the longitudinal plane of symmetry of the harvester.

4. Harvester according to claims 1 to 3 **characterised in that** the harvester frame 43 comprises two gates, that is a rear gate 1 and a front gate 2, are connected to each other by a horizontal supporting beam 3 and an upper longitudinal connecting beam 4 and a lower longitudinal connecting beam 5.

5. Harvester according to claims 1 to 4 **characterised in that** the rear gate 1 comprises vertical beams 6 to which columns 7 of road wheels 27 are attached detachably or permanently.

6. Harvester according to claim 5 **characterised in that** the road wheel columns 7 are constructed of a sleeve 24, and into the sleeve 24 a sliding insert 25 is installed, and in the sleeve 24 a tube 26 is rotatably mounted, wherein the tube 26 is terminated in its lower part with an axle 49 with road wheels 27 mounted on this axle, whereas in the upper part the road wheel column 7 is terminated with a journal 28 of rectangular cross-section, and furthermore onto the journal 28 an upper tube 29 is fitted, wherein the tube 29 is terminated in the lower part with a hub 30 of rectangular cross-section, and furthermore the hub 30 is slidably fitted to the journal 28, whereas the upper tube 29 in its upper part is terminated with a journal 31, wherein the journal 31 is mounted in bearings 52 mounted in a bearing housing 32, wherein the bearing housing 32 is attached to the harvester frame 43, and inside the upper tube 29 there is an actuator 36, attached with one side to the tube 26 and with the other side to the journal 31.

7. Harvester according to claim 6 **characterised in that** a control lever 33, driven by an actuator 34, is attached to the journal 31.

8. Harvester according to claims 6 to 7 **characterised in that** the journal 31 is connected physically or magnetically to the shaft of an apparatus 37 for preferably mechatronic angle measurement and the fixed part of the apparatus 37 is attached to the bearing housing 32.

9. Harvester according to claims 1 to 8 **characterised in that** each shaker 38 consists of a shaking head 12 driven by a motor, and furthermore the shaking head 12 is integrated with the shaker column 9, wherein the shaking head 12 imparts oscillating movement to these integrated elements 9 and 12, and furthermore these integrated elements 9 and 12 are rotatably mounted in the upper horizontal end and lower horizontal end of the shaker frame 8, wherein the shaking head 12 is mounted in the upper horizontal end of the shaker frame 8.

10. Harvester according to claim 9 **characterised in that** the shaker frame 8 is pivotably attached to the harvester frame 43.

11. Harvester according to claims 9 to 10 **characterised in that** on the shaker column 9 shaking assemblies 10 are mounted, consisting of a hub and shaking rods 11, wherein the shaking rods 11 are attached radially to the hub around its entire circumference.

12. Harvester according to claim 11 **characterised in that** the shaking rods 11 excluding the section of attachment of these rods in the hub, are preferably of conical shape preferably along the entire longitudinal axis of this rod, wherein larger cross-sections of the rod are positioned on the hub side.

13. Harvester according to claims 9 to 12 **characterised in that** the shakers 38 are positioned in the direction towards the vertical plane of the longitudinal axis of the harvester by means of levers 46, wherein the levers 46 are pivotably attached to the strip of the harvester frame 43, whereas to the opposite ends of these levers 46 springs 45 are attached with one end, whereas the other end of the springs 45 is attached to a tie rod 47, wherein the tensioning force of the springs 45 is regulated by the movement of the tie rod 47 moved by an actuator 48.

14. Harvester according to claims 1 to 13 **characterised in that** in the front part of the harvester before the sealing scales 51 two control apparatuses 69 are mounted, controlling the transverse movement of the front part of the harvester, wherein the control apparatus 69 consists of a strip 70 rotatably mounted and deflected by the tree trunk, and furthermore the control apparatus 69 consists of at least one inductive sensor and a system transmitting electrical signals to solenoid valves controlling the movement of the actuator 22 for rotating the drawbar 21.

15. Harvester according to claims 1 to 14, **characterised in that** in the rear part of the harvester above the surface of the sealing scales 51 two control apparatuses 72 are mounted, controlling the transverse movement of the rear part of the harvester, wherein the control apparatus 72 consists of a control strip 77 rotatably mounted and deflected by the tree trunk, and furthermore the control apparatus 72 consists of at least one sensor 71 preferably inductive transmitting electrical signals to the apparatus 37 preferably for mechatronic measurement of the steering angle, controlling the steering of the road wheels 27.
